(19) Europäisches Patentamt
European Patent Office
Office européen des brevets

(11) **EP 1 906 357 A1**

(12) **EUROPEAN PATENT APPLICATION**

(43) Date of publication:
02.04.2008 Bulletin 2008/14

(51) Int Cl.:
*G06T 5/50* (2006.01)     *G06T 7/20* (2006.01)

(21) Application number: 06020431.0

(22) Date of filing: 28.09.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: MATSUSHITA ELECTRIC INDUSTRIAL CO., LTD.
Osaka 571-8501 (JP)

(72) Inventors:
• Debes, Christian
63225 Langen (DE)

• Wedi, Thomas
63225 Langen (DE)
• Düking, Sven
63225 Langen (DE)

(74) Representative: Grünecker, Kinkeldey, Stockmair & Schwanhäusser
Anwaltssozietät
Maximilianstrasse 58
80538 München (DE)

(54) **Combined optimization of motion estimator and super-resolution**

(57) The present invention relates to a method and a corresponding apparatus for computing a high-resolution image from a plurality of low-resolution images by exploiting sub-pixel displacements of an imaged object. The present invention further relates to a method and a corresponding apparatus for determining a set of displacement vectors indicating these sub-pixel displacements. The set of displacement vectors and the resulting high-resolution image are optimized simultaneously in accordance with a quality measure computed for the high-resolution image. The quality measure is derived from a comparison of the low-resolution images to "simulated" low-resolution images. The "simulated" low-resolution images are generated by low-pass filtering, shifting and down-sampling the high-resolution image so as to mimic the image acquisition system that has been used for acquiring the plurality of low-resolution images.

Fig. 4

EP 1 906 357 A1

**Description**

The present invention relates to super-resolution image reconstruction, i.e., to a technique for computing high-resolution images from a sequence of low-resolution images by exploiting sub-pixel displacements of the imaged object.

BACKGROUND OF THE INVENTION

High-quality digital images at high-resolution usually require costly high-performance imaging devices. As a way to cut down hardware expenses, methods for converting a sequence of blurred, noisy low-resolution images into a higher-resolution image or sequence have recently attracted considerable interest among computer scientists and image processing specialists. These methods are commonly referred to as super-resolution interpolation or super-resolution reconstruction.

The basic idea behind super-resolution (SR) image reconstruction is to exploit sub-pixel movements of image components within the sequence of low-resolution images to reconstruct image details that are not apparent from any of these images by itself, for instance, due to aliasing artifacts. A first step in such an algorithms thus consists of precisely determining the displacement of the imaged object in each low-resolution (LR) image relative to a reference LR image. These displacements are employed in a second step to align the LR images on a HR grid. This step is usually called "registration". A high-resolution (HR) image may be reconstructed from the aligned LR images by means of, for instance, non-uniform interpolation techniques. Finally, de-blurring and de-noising filters may be applied in a restoration step to generate the super-resolution image.

Flawless registration is crucial to the success of SR image reconstruction. A single LR image that is incorrectly or imprecisely aligned will lead to severe artifacts in the reconstructed HR image. Consequently, precise determination of image displacements is of utmost importance.

In conventional SR algorithms, image displacements are either supposed to be known beforehand or determined in a separate step by means of motion estimation techniques, in particular phase correlation and/or block matching algorithms. Determining image displacements at sub-pixel precision, however, involves interpolation of the corresponding low-resolution images. Image displacements are thus error-prone due to presence of aliasing artifacts and unavoidable interpolation errors.

Apart from SR image reconstruction, accurate displacement information is also required in a variety of other applications, ranging from motion compensation in video data compression to disparity estimation in 3D object recognition.

There is thus a need for an improved algorithm that can provide highly accurate displacement information at sub-pixel resolution for a plurality of images. Moreover, there is a need for an improved SR algorithm that can provide high quality SR images even when the image displacements are not precisely known beforehand.

SUMMARY OF THE INVENTION

It is an aim of the present invention to provide an improved SR algorithm that is capable of computing a high-quality SR image from a plurality of LR images.

It is a further aim of the present invention to provide an algorithm than can provide highly accurate image displacement information at sub-pixel resolution for the plurality of LR images.

This is achieved by the features as set forth in the independent claims.

Preferred embodiments are subject matter of the dependent claims.

It is the particular approach of the present invention to calculate a quality measure of the high-resolution image and to optimize the displacement vectors and the resulting high-resolution image accordingly. The quality measure is preferably derived from a comparison of the low-resolution images to properly filtered, shifted, and down-sampled versions of the HR image.

According to a first aspect of the present invention, a super-resolution image processing method is provided. The method comprises the steps of receiving a first plurality of low-resolution images, determining a plurality of displacement vectors indicating relative displacements of the first plurality of low-resolution images, computing a high-resolution image from the first plurality of low-resolution images and the plurality of displacement vectors, calculating a measure indicating the quality of the computed high-resolution image, and performing an optimization process on the plurality of displacement vectors in accordance with the calculated measure so as to simultaneously improve accuracy of the plurality of displacement vectors and quality of the high-resolution image.

According to a further aspect of the present invention, a super-resolution image processing apparatus is provided. The apparatus comprises an input unit for receiving a first plurality of low-resolution images, a displacement determination unit for determining a plurality of displacement vectors indicating relative displacements of the first plurality of low-resolution images, a resolution enhancement unit for computing a high-resolution image from the first plurality of low-resolution images and the plurality of displacement vectors, and a cost function unit for calculating a measure indicating the quality of of the computed high-resolution image, wherein the displacement determination unit is adapted for performing an optimization process on the plurality of displacement vectors in accordance with the calculated measure so as to simultaneously improve accuracy of the plurality of displacement vectors and quality of the high-resolution image.

Preferably, either the high-resolution image or the plurality of displacement vectors (or both) are output in accordance with a result of the optimization process. In this manner, the apparatus and the method of the present invention can be employed for reconstructing a high-resolution image from a plurality of low-resolution images and for determining a plurality of displacement vectors indicating relative displacements of a plurality of low-resolution images, respectively.

Preferably, the measure is calculated by reconstructing a second plurality of low-resolution images from the high-resolution image, and computing image differences between each of the second plurality of low-resolution images to a corresponding one of the first plurality of low-resolution images, wherein the calculating step is performed in accordance with the computed image differences so that the calculated measure is higher if the computed image differences are smaller. Furthermore, each one of the second plurality of low-resolution images is preferably reconstructed by low-pass filtering the high-resolution image, shifting the filtered high-resolution image by an amount determined by a corresponding displacement vector of the plurality of displacement vectors, and down sampling the shifted high-resolution image to a resolution of the low-resolution image. In this manner, the quality of the high-resolution image can be assessed by simulating the image acquisition system used for acquiring the first plurality of low-resolution images and by comparing thus generated low-resolution images to the first plurality of low-resolution images.

Preferably, the measure is calculated by further computing pixel differences between neighbouring pixels of the high-resolution image, wherein the calculating step is performed in accordance with the computed pixel differences so that the calculated measure is higher if the computed pixel differences are smaller. In this manner, the ill-posed problem of finding the high-resolution image can be regularized and artefactual fluctuations between neighbouring pixels can be eliminated.

Preferably, a cost function comprising terms with said image differences and a regularization term based on said pixel differences is computed. Furthermore, the optimization process may be a numerical process for minimizing the cost function. The high-resolution image may even be computed by a numerical process for minimizing the cost function. Preferably, the optimization process is a numerical process to simultaneously optimize the plurality of displacement vectors and to compute the high-resolution image by jointly minimizing the cost function in variables describing the plurality of displacement vectors and the high-resolution image. In this manner, the displacement vectors and the high-resolution image can be optimized simultaneously and the quality of the resulting high-resolution image is insensitive to the accuracy of the initially determined displacement vectors.

The above and other objects and features of the present invention will become more apparent from the following description and preferred embodiments given in conjunction with the accompanying drawings, in which:

Fig. 1    is a schematic drawing illustrating principles of SR image reconstruction;

Fig. 2    is a block diagram of a conventional SR image reconstruction apparatus employing the non-uniform interpolation approach;

Fig. 3    is a schematic drawing illustrating a conventional method for determining displacement vectors;

Fig. 4    is a block diagram of a SR image reconstruction apparatus according to a first embodiment of the present invention;

Fig. 5    is a flow chart illustrating a method for SR image reconstruction according to the first embodiment of the present invention;

Fig. 6    is a block diagram of a SR image reconstruction apparatus according to a second embodiment of the present invention; and

Fig. 7    is a flow chart illustrating a method for SR image reconstruction according to the second embodiment of the present invention.

DETAILED DESCRIPTION

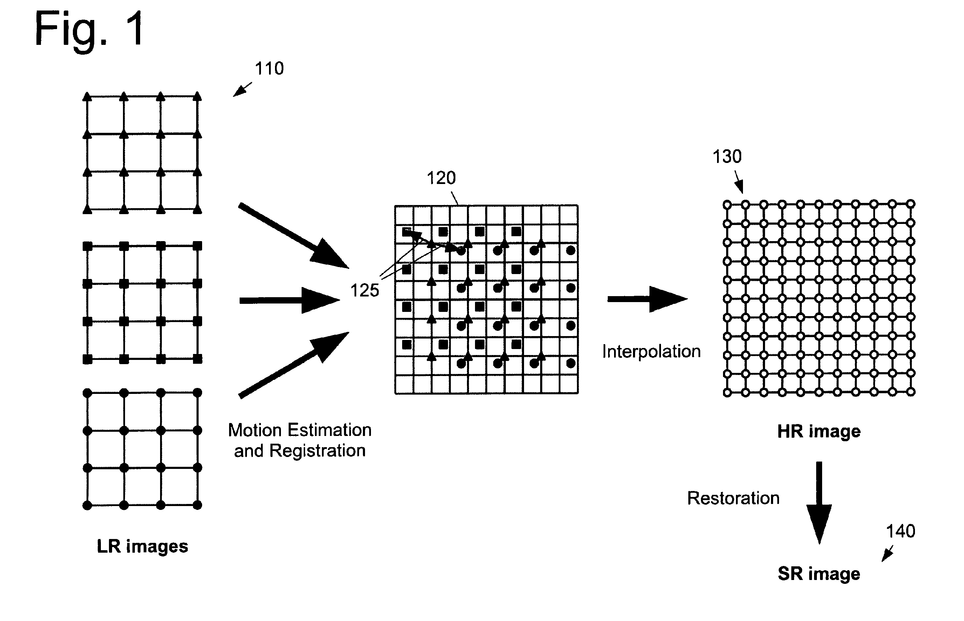

Principles of conventional SR image reconstruction algorithms are explained in connection with Fig. 1. A first step in such an algorithm consists of precisely determining the displacement of the imaged object in each LR image 110 relative to a reference LR image. These displacements 125 are employed in the registration step to align the LR images on a HR grid 120. A HR image 130 may be reconstructed from the aligned LR images 110 by means of non-uniform interpolation techniques. Finally, de-blurring and de-noising filters may be applied in a restoration step to generate the SR image 140.

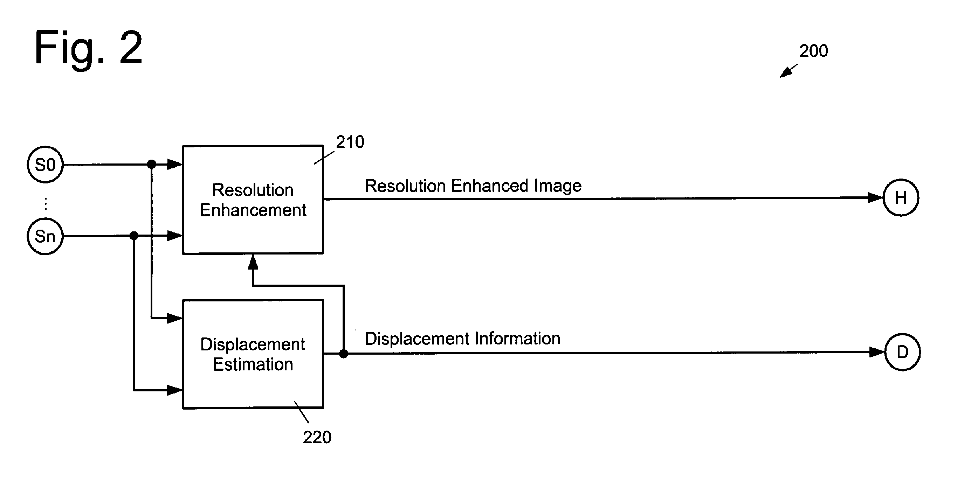

Figure 2 is a block diagram of a conventional SR image reconstruction apparatus comprising a resolution enhancement unit 210 and a displacement estimation unit 220. Both the resolution enhancement unit 210 and the displacement estimation unit 220 receive input images $S_0$ to $S_n$. For any given set of LR input images $S_0$ to $S_n$, the displacement estimation unit 220 determines displacement information D consisting of a set of displacement vectors $d_0$ to $d_n$. Each displacement vector $d_i$ indicates the displacement of input image $S_i$ relative to reference image $S_0$. The displacement information is fed to resolution enhancement unit 210 in order to perform the registration step as explained above. Resolution enhancement unit 210 further performs interpolation and restoration steps in order to generate and output a resolution enhanced image H.

As an alternative to the non-uniform interpolation technique, SR image reconstruction can also be approached as an inverse problem, wherein the output of the image acquisition system, i.e., the set of LR images, is known, whereas the input, i.e., the original HR image, is the unkown. This approach requires precise knowledge of the properties of the image acquisition system in terms of its filter characteristics, the displacement between consecutive images, and so on. The inverse problem is then solved by simulating the image acquisition system and varying the reconstructed HR image until a simulated set of LR images matches the original LR images. However, due to the limited number of LR images and the properties of the image acquisition system, this problem is generally ill-posed so that regularization techniques have to be employed.

The inverse-problem approach of determining the HR image H can be formalized as minimizing the cost function

$$C(H) = \sum_{i=0}^{n} \| S_i - S_i'(H) \|^2 + c \| \mathbf{N} H \|^2 \qquad (1)$$

in H, which is considered as an element of a high-dimensional vector space with dimension equal to the number of pixels of the HR image. Further, N is generally a high pass filter, c is a (positive) regularization parameter, and $S_i'(H)$ is the simulated LR image generated by filtering, shifting (by displacement vector $d_i$), and down-sampling the HR image H.

Equation (1) can be minimized by means of a conventional optimization algorithm suitable for high-dimensional optimization problems, such as gradient descent, simulated annealing or genetic algorithms.

The conventional SR image reconstruction methods explained above depend critically on an accurate determination of displacement vectors $d_0$ to $d_n$, as it is performed by the displacement estimation unit 220.

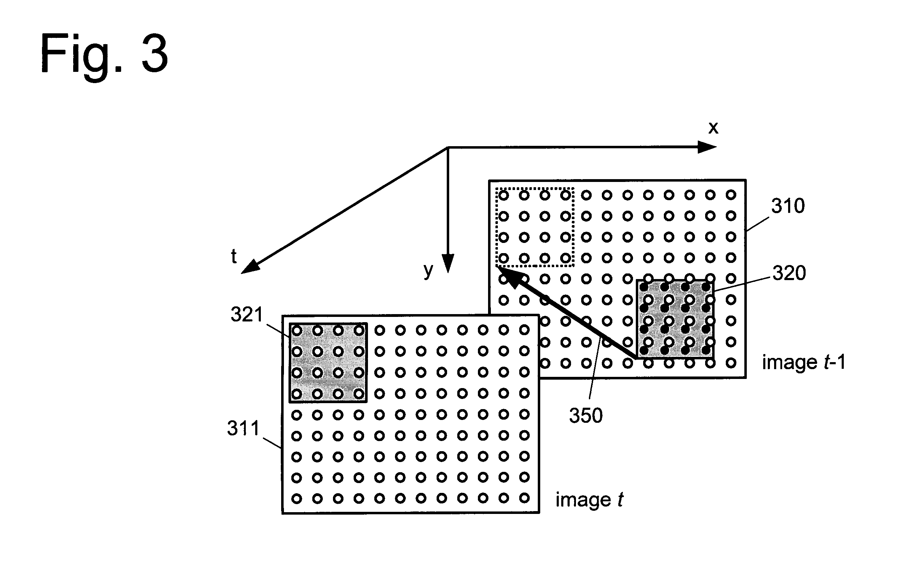

A conventional method for determining displacement vectors is illustrated in Fig. 3. This diagram shows two successive images 310 and 311 at time instances *t*-1 and t, respectively. The image content of the exemplary block 321 has shifted between the two images by an amount described by a displacement vector 350. In this example, the image content has shifted by an amount that is not an integer multiple of the sampling distance. Consequently, pixels of the block 320 (black dots) are not located on the sampling grid (open circles) of image 310. Hence, determination of displacement vectors has to rely on an interpolation of the image signal in order to resolve fractional pel displacements.

Bilinear interpolation may be employed to interpolate the image signal for motion estimation purposes. Further, displacement vectors are only determined up to half-pel or quarter-pel resolution. Limited accuracy of the displacement vectors, however, has a significant impact on SR image reconstruction, as explained above.

The present invention provides a method and an apparatus for SR image reconstruction that overcomes the problem of inaccurate displacement vectors by jointly optimizing the determined displacement vectors and the reconstructed SR image. The present invention also provides a method and an apparatus for accurately determining displacement vectors at sub-pixel resolution for a plurality of LR images.

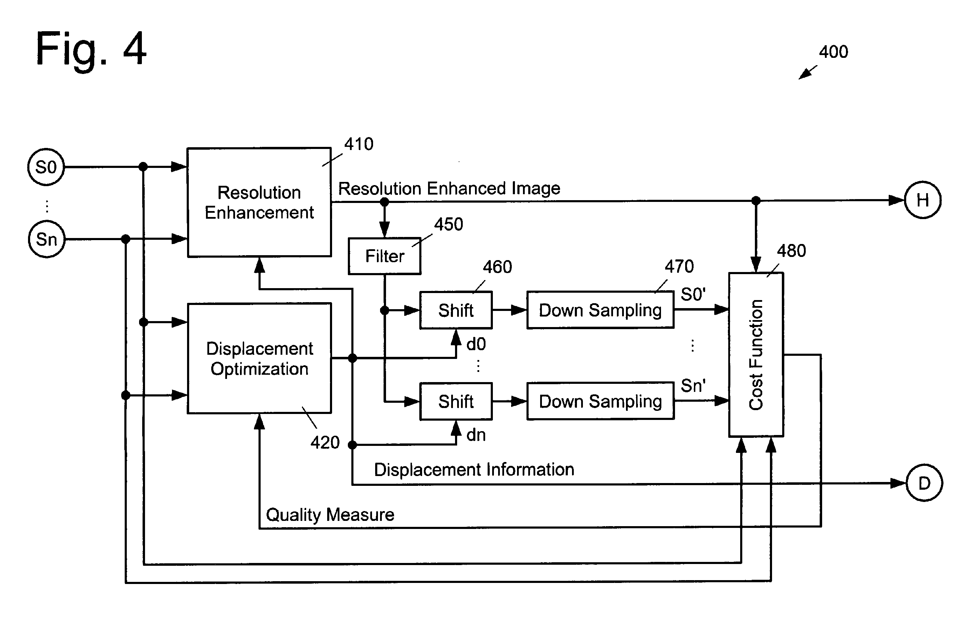

Figure 4 is a block diagram of a SR image reconstruction apparatus according to a first embodiment of the present invention. The SR image reconstruction apparatus comprises a resolution enhancement unit 410 and a displacement optimization unit 420. Both the resolution enhancement unit 410 and the displacement optimization unit 420 receive input images $S_0$ to $S_n$. The displacement estimation unit 420 outputs displacement information D consisting of a set of displacement vectors $d_0$ to $d_n$. Each displacement vector $d_i$ indicates the displacement of input image $S_i$ relative to reference image $S_0$. The resolution enhancement unit 410 computes a HR image from the LR input images $S_0$ to $S_n$ and displacement information D. The apparatus 400 may output both the HR image H and the displacement information D.

The SR image reconstruction apparatus further comprises an internal model of the image acquisition system by which the LR images have been acquired. This model comprises a filter unit 450, which is adapted to reproduce the blurring effect introduced by the optical system, a plurality of shift units 460 and down-sampling units 470. Each shift unit 460 receives displacement information from the displacement optimization unit 420 so as to reproduce the displacement of the corresponding LR image. Down-sampling units 470 describe the sampling process performed by the digital image sensor. By means of this model, the image acquisition system can be simulated so as to generate a sequence of LR images $S_0$' to $S_n$' from the reconstructed HR image H.

Provided that the internal model faithfully describes the original image acquisition system, each of the simulated LR images $S_0$' to $S_n$' will be identical to the corresponding one of the input LR images $S_0$ to $S_n$, if the reconstructed HR image H is sufficiently similar to the original HR image.

The set of simulated LR images $S_0$' to $S_n$' is fed to a cost function unit 480, which also receives input images $S_0$ to $S_n$ and the output of the resolution enhancement unit 410. The output of the cost function unit 410 is fed back to the displacement optimization unit 420.

Operation of the SR image reconstruction apparatus 400 according to the first embodiment of the present invention is explained below.

Starting from the LR images $S_0$ to $S_n$, the displacement optimization unit 420 generates motion information comprising a plurality of displacement vectors $d_0$ to $d_n$ by a conventional method as described above in conjunction with Fig. 3. This set of displacement vectors is fed to the resolution enhancement unit 410, where it is employed to generate a resolution enhanced image H. This step may be based on any conventional SR image reconstruction method, in particular on the method of non-uniform interpolation or non-linear optimization described above.

In the next step, the quality of the generated HR image H is assessed by comparing each of the LR images to a corresponding one of the simulated LR images $S_0$' to $S_n$'. More specifically, the HR image H is low-pass filtered by filter unit 450 in order to reproduce the blurring effect of the optical imaging system that has been used in for acquiring the LR images $S_0$ to $S_n$. From the filtered HR image, a plurality of shifted HR images is generated by means of shifting units 460 in accordance with the set of displacement vectors $d_0$ to $d_n$. Each of the shifting units 460 performs a shifting operation by an amount indicated by the corresponding one of the displacement vectors $d_0$ to $d_n$. The shifted images are then down-sampled by down-sampling units 470 in order to meet the resolution of the LR images $S_0$ to $S_n$. Note that displacement vector d0 describes the displacement of the reference image relative to itself and is thus equal to zero. The corresponding shifting unit for d0 may be omitted.

The image signals of the down-sampled, shifted, and filtered versions of the HR image H are fed into the cost function unit 480 in order to be compared to the LR input images $S_0$ to $S_n$. Any function describing a distance measure between two images may be used for this purpose, in particular a function that computes the sum of squared differences of all corresponding pixels; i.e.,

$$\|S_i - S_i'\|^2 \;=\; \sum_{x,y} [S_i(x,y) - S_i'(x,y)]^2, \tag{2}$$

wherein $S_i(x,y)$ is the pixel value of image $S_i$ at position $x$ and $y$.

In order to assess the quality of the HR image, the cost function unit 480 may compute a cost function C that takes all image differences into account, e.g.,

$$C(H) \;=\; \sum_{i=0}^{n} \|S_i - S_i'(H)\|^2. \tag{3}$$

Here, the notation $S_i'(H)$ indicates that images $S_0$' to $S_n$' are dependent on the HR image H. Hence, cost function C(H) is a positive quantity that is the smaller the greater the similarity between the input images $S_0$ to $S_n$ and the generated LR images $S_0$' to $S_n$'. As explained above, quality of the HR image H is the better the greater this similarity. As a measure $Q(H)$ describing quality of the HR image, the reciprocal of the cost function can be defined,

$$Q(H) \;=\; C(H)^{-1}. \tag{4}$$

Due to the limited number of LR input images, a plurality of different HR images H may actually lead to the same values for cost function and quality measure. Generally, the HR image that exhibits the least amount of rapid pixel fluctuations, i.e., the smoothest image is preferred. This requirement may be added to the cost function in form of a regularization term that penalizes large differences between neighboring pixels or, more generally, high frequency components. Preferably, the cost function unit 480 may thus compute a cost function of the form

$$C(H) = \sum_{i=0}^{n} \|S_i - S_i^{'}(H)\|^2 + c \cdot \rho(NH). \tag{5}$$

Here, c is a (positive) regularization parameter, N is an operator describing relations between neighboring pixels such as a gradient or high-pass filter, and p is a quadratic or clipped quadratic function that penalizes large differences between neighboring pixels. In particular, p may be of the form

$$\rho(X) = \|X\|^2, \tag{6}$$

and N may be the Sobel operator

$$N = \sqrt{G_x^2 + G_y^2} \tag{7}$$

with convolution kernels

$$G_x = \begin{pmatrix} -1 & 0 & +1 \\ -2 & 0 & +2 \\ -1 & 0 & +1 \end{pmatrix}, \quad G_y = \begin{pmatrix} +1 & +2 & +1 \\ 0 & 0 & 0 \\ -1 & -2 & -1 \end{pmatrix}. \tag{8}$$

The computed value of the cost function is fed back to the displacement optimization unit 420. For a particular set of displacement vectors $d_0$ to $d_n$, the displacement optimization unit 420 may thus assess the quality of the resulting HR image H by evaluating Eq. (3) or Eq. (5). The value of the cost function or its reciprocal, the quality measure, are then used to optimize the set of displacement vectors, and therewith the HR image, by employing a conventional optimization method such as gradient descent, simulated annealing, genetic algorithms, etc. The HR image that is finally output by the SR image reconstruction apparatus 400 is the HR image that corresponds to the optimized set of displacement vectors.

According to this embodiment, the displacement vectors and the HR image can be simultaneously optimized. Accuracy of the displacement vectors is improved because determination of displacement vectors involves SR images rather than conventionally interpolated LR images. Consequently, SR images generated according to the present invention exhibit a higher quality than conventional SR images because the registration step can be performed more accurately and the image acquisition system can be modeled more faithfully.

According to an alternative embodiment of the present invention, the best set of displacement vectors may be chosen from a plurality of sets of candidate displacement vectors in accordance with the corresponding value of the cost function. The problem of choosing the right set of displacement vectors frequently arises when a phase correlation technique is employed in order to estimate motion in a sequence of video images and to derive displacement vectors from the estimated motion.

According to a further alternative embodiment, an initial set of displacement vectors can be fine tuned by a numerical optimization process. Starting with displacement vectors that have been determined, for instance, with half-pel resolution by means of a block matching method as described in connection with Fig. 3, a numerical optimization process such as steepest descent may be employed in order to refine the displacement vectors and simultaneously improve therewith the quality of the HR image. In the course of the optimization process, the displacement vectors and the HR image are iteratively improved until a certain exit criterion is met. The exit criterion may consist of a minimum quality level that is to be reached or a maximum number of iterations. The iteration may also be stopped when either or both of the displacement vectors and the HR image is not changing any longer.

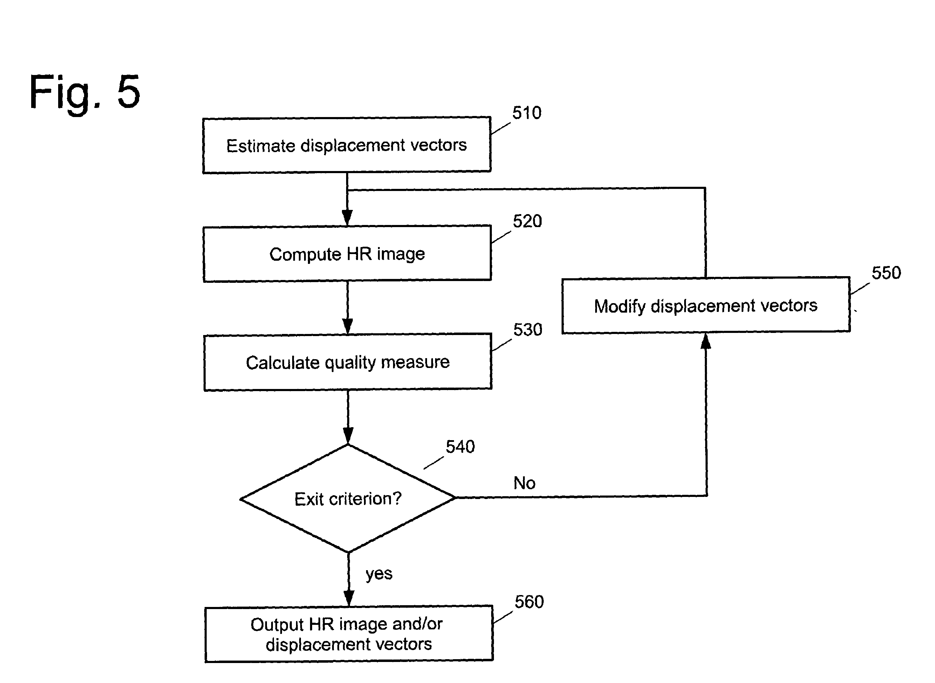

Figure 5 is a flow chart illustrating a method for reconstructing a SR image from a plurality of LR images in accordance with the first embodiment of the present invention.

In step 510, initial values for a set of displacement vectors are determined according to a conventional motion estimation method such as block matching or phase correlation and in particular to the method described above in connection with Fig. 3.

Using the current set of displacement vectors, a HR image is computed from the set of LR input images in step 520. This step may be based a conventional SR image reconstruction method such as non-uniform interpolation or non-linear optimization as explained above. Depending on the reconstruction method chosen, this step may thus further comprise registration, interpolation, and restoration steps or iterative optimization steps such as evaluating a cost function according to Eq. (1), determining its gradient either numerically or according to an explicit formula, and updating the HR image accordingly.

In step 530, a quality measure of the HR image is calculated. This step may involve generating LR images by simulating the image acquisition system that has been used to acquire the original LR images, and in particular steps of filtering, shifting, and down-sampling the HR image in accordance with the current set of displacement vectors. It may further comprise adding a regularization term, and in particular applying a high-pass filter to the HR image and computing the norm of the filtered HR image in accordance with Eq.(5).

Unless an exit criterion is fulfilled in step 540, the current set of displacement vectors is modified in step 550 and steps 520 to 540 are iterated. When the exit criterion is fulfilled in step 540, the current HR image and/or the current set of displacement vectors is output and the processing terminates.

The modifying step 550 may consist of searching a predefined set of candidate displacement vectors or refining the initial displacement vectors. Especially in the latter case, the method may further comprise a step of computing the gradient of the quality measure with respect to the displacement vectors. The current set of displacement vectors is then modified in accordance with the computed gradient as in a conventional gradient descent method. However, any other conventional optimization method such as simulated annealing or genetic algorithms may be used as well.

The exit criterion terminates the optimization process when the optimum displacement vectors were found, when a maximum number of iterations has been reached, or when the iteration has converged so that the new set of displacement vectors is closer than a certain threshold to the previous set of displacement vectors. Other exit criteria may be used depending on the particular optimization algorithm that is employed.

According to this method, the set of displacement vectors can be optimized based on the quality of the resulting HR image. Therefore, the problem of accurately determining displacement vectors beforehand can be avoided. Moreover, the quality of the final SR image is improved.

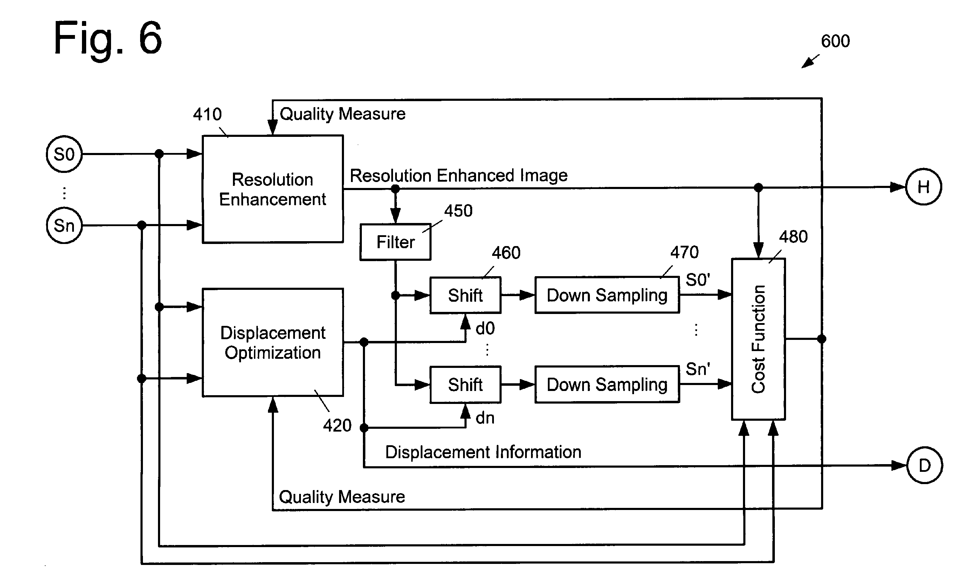

Figure 6 is a block diagram of a SR image reconstruction apparatus according to a second embodiment of the present invention. This block diagram is largely similar to Fig. 4, wherein like parts are denoted by like reference numerals. A repetition of a detailed explanation for these parts is omitted.

The block diagram of Fig. 6 differs from Fig. 4 in that the resolution enhancement unit 410 receives input from the cost function unit instead of the displacement optimization unit 420.

The operation of the SR image reconstruction apparatus 600 according to this embodiment differs from the operation of the previous embodiment in that the output of the cost function unit 480 is used to compute both the displacement vectors and the HR image. In particular, the operation performed by the SR image reconstruction apparatus 600, which will be explained below in greater detail, corresponds to minimizing a cost function of the form

$$C(H,d) = \sum_{i=0}^{n} \|S_i - S_i'(H,d)\|^2 + c \cdot \rho(NH) \qquad (9)$$

jointly in H and d. In contrast to Eq.(5), the cost function C is here considered as a function of H and d. Optimization of Eq.(9) determines both the HR image and the displacement vectors simultaneously.

Referring to Fig. 6, the resolution enhancement unit 410 and the displacement optimization unit 420 output a resolution enhanced image and a set of displacement vectors, respectively. Based on this output, a set of simulated LR images $S_0'$ to $S_n'$ is generated by means of the filtering unit 450, the shifting units 460, and the down-sampling units 470 as explained above in connection with the first embodiment. The cost function unit 480 performs the same operation as in the first embodiment, its output, however, is fed to both the resolution enhancement unit 410 and the displacement optimization unit 420. Based on the feedback from the cost function unit, the resolution enhancement unit 410 and the displacement optimization unit 420 perform an optimization process in order to optimize the resolution enhanced image H and the displacement information D simultaneously.

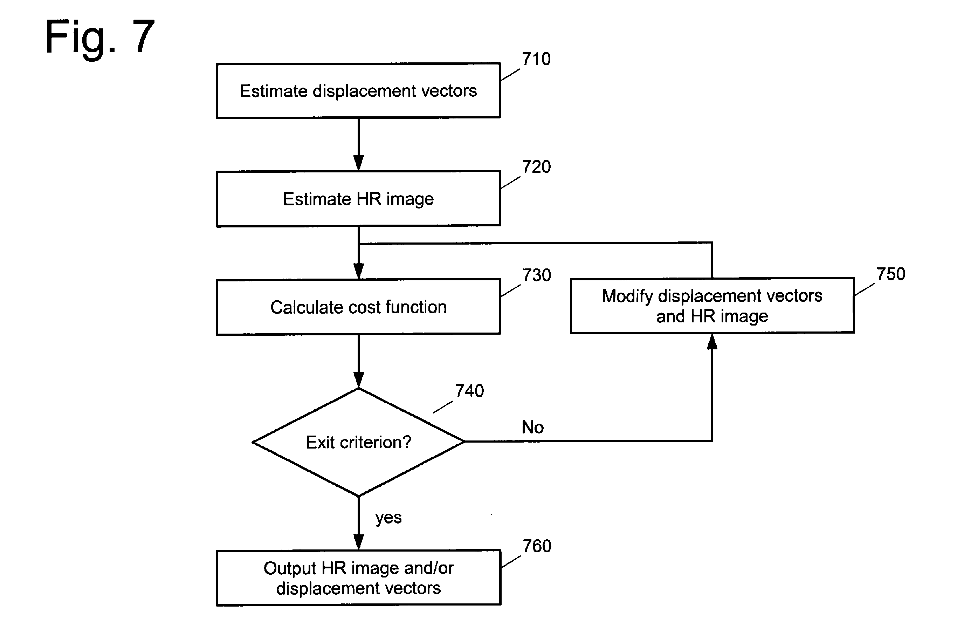

Figure 7 is a flow chart illustrating a method for SR image reconstruction in accordance with the second embodiment of the present invention.

In step 710, initial values for a set of displacement vectors are determined. This step may be performed in accordance with a conventional motion estimation method such as block matching or phase correlation and in particular to the method describe above in connection with Fig. 3.

In step 720 an initial HR image is generated. This step may be performed by using the current set of displacement vectors and computing a HR image from the set of LR input images in step 720. This computation may be based on a conventional SR image reconstruction method such as non-uniform interpolation as explained above. Depending on the reconstruction method chosen, this step may further comprise registration, interpolation, and restoration steps. Alternatively, an interpolated version of one of the LR images, especially the reference image $S_0$, may be employed as a starting value for determining the HR image.

In step 730, the value of the cost function is calculated for the current HR image and the current set of displacement vectors. This step involves generating LR images by simulating the image acquisition system that has been used to acquire the original LR images, and in particular steps of filtering, shifting, and down-sampling the current HR image in accordance with the current set of displacement vectors. It may further comprise adding a regularization term, and in particular applying a high-pass filter to the current HR image and computing the norm of the filtered HR image in accordance with Eq.(9).

Unless an exit criterion is fulfilled in step 740, the current HR image and the current set of displacement vectors are modified in step 750 and steps 720 to 740 are iterated. When the exit criterion is fulfilled in step 740, the current HR image and/or the current set of displacement vectors is output and the processing terminates.

The modifying step 750 may further comprise the step of computing the gradient of the cost function with respect to the current set of displacement vectors and the current HR image, both of which are then modified in accordance with the computed gradient as in a conventional gradient descent method. However, any other conventional optimization algorithm such as simulated annealing or genetic algorithms may be used as well.

The exit criterion terminates the optimization process when a maximum number of iterations has been reached or when the iteration has converged so that the new set of displacement vectors is closer than a certain threshold to the previous set of displacement vectors and/or the new HR image is closer than a certain threshold to the previous HR image. Other exit criteria may be used depending on the particular optimization algorithm that is employed.

According to this embodiment, the displacement vectors and the HR image can be optimized simultaneously based on the quality measure or cost function computed for the HR image. Accuracy of the displacement vectors is improved because determination of displacement vectors involves SR images rather than conventionally interpolated LR images. Consequently, SR images generated according to the present invention exhibit a higher quality than conventional SR images because the registration step can be performed more accurately and the image acquisition system can be modeled more faithfully.

The present invention has been described in terms of methods and apparatuses that operate on a plurality of LR images. However, the present invention can also be applied to individual blocks of these images and in particular to a plurality of blocks from a sequence of video images.

The present invention can be applied to a plurality of sequentially acquired LR images. In this case, either the camera or the object or both may be moving so as to generate sub-pixel displacements required for SR image reconstruction. Alternatively, the invention can also be applied to a plurality of LR images that have been acquired simultaneously by a plurality of cameras located at different view points.

The apparatuses and the methods of the present invention have been described as providing an output of both the HR image and the displacement information. Depending on the particular application, however, they may provide an output of either the HR image or the displacement information. In particular, if the present invention is employed to generate a super-resolution image from a plurality of LR images, outputting the HR image alone suffices. On the other hand, if the present invention is employed to generate a highly accurate set of displacement vectors describing image displacements with sub-pixel resolution, outputting the displacement information alone may suffice.

Summarizing, the present invention relates to a method and a corresponding apparatus for computing a high-resolution image from a plurality of low-resolution images by exploiting sub-pixel displacements of an imaged object. The present invention further relates to a method and a corresponding apparatus for determining a set of displacement vectors indicating these sub-pixel displacements. The set of displacement vectors and the resulting high-resolution image are optimized simultaneously in accordance with a quality measure computed for the high-resolution image. The quality measure is derived from a comparison of the low-resolution images to "simulated" low-resolution images. The "simulated" low-resolution images are generated by low-pass filtering, shifting and down-sampling the high-resolution image so as to mimic the image acquisition system that has been used for acquiring the plurality of low-resolution images.

**Claims**

1. A super-resolution image processing method comprising the steps of:

    receiving a first plurality of low-resolution images (S0,...,Sn);
    determining (510; 710) a plurality of displacement vectors (d0,...,dn) indicating relative displacements of the first plurality of low-resolution images (S0,...,Sn); and
    computing (520; 730-750) a high-resolution image (H) from the first plurality of low-resolution images (S0,..., Sn) and the plurality of displacement vectors (d0,...,dn),
    **characterized by**
    calculating (530; 730) a measure indicating the quality of the computed high-resolution image (H); and
    performing (550; 750) an optimization process on the plurality of displacement vectors (d0,...,dn) in accordance with the calculated measure so as to simultaneously improve accuracy of the plurality of displacement vectors (d0,...,dn) and quality of the high-resolution image (H).

2. A method according to claim 1 for reconstructing a high-resolution image from a plurality of low-resolution images, said method further comprising the step of:

    outputting the high-resolution image (H) in accordance with a result of the optimization process.

3. A method according to claim 1 for determining a plurality of displacement vectors indicating relative displacements of a plurality of low-resolution images, said method further comprising the step of:

    outputting the plurality of displacement vectors (d0,...,dn) in accordance with a result of the optimization process.

4. A method according to any of claims 1 to 3, further comprising the steps of:

    reconstructing a second plurality of low-resolution images (S0',...,Sn') from the high-resolution image (H); and
    computing image differences between each of the second plurality of low-resolution images (S0',...,Sn') to a corresponding one of the first plurality of low-resolution images (S0,...,Sn);

    wherein the calculating step is performed in accordance with the computed image differences so that the calculated measure is higher if the computed image differences are smaller.

5. A method according to claim 4, wherein each one of the second plurality of low-resolution images is reconstructed by low-pass filtering the high-resolution image (H);
    shifting the filtered high-resolution image (H) by an amount determined by a corresponding displacement vector of the plurality of displacement vectors (d0,...,dn); and
    down sampling the shifted high-resolution image (H) to a resolution of the low-resolution image.

6. A method according to claim 4 or 5, further comprising the steps of:

    computing pixel differences between neighbouring pixels of the high-resolution image (H);

    wherein the calculating step is performed in accordance with the computed pixel differences so that the calculated measure is higher if the computed pixel differences are smaller.

7. A method according to claim 6, further comprising the step of:

    computing a cost function comprising terms with said image differences and a regularization term based on said pixel differences.

8. A method according to claim 7, wherein the optimization process is a numerical process for minimizing the cost function.

9. A method according to claim 7, wherein the high-resolution image (H) is computed by a numerical process for minimizing the cost function.

**10.** A method according to claim 7, wherein the optimization process is a numerical process to simultaneously optimize the plurality of displacement vectors (d0,...,dn) and to compute the high-resolution image (H) by jointly minimizing the cost function in variables describing the plurality of displacement vectors (d0,...,dn) and the high-resolution image (H).

**11.** A computer program product comprising a computer readable medium having computer readable program code embodied thereon, the program code being adapted to carry out all steps of any of claims 1 to 10.

**12.** A super-resolution image processing apparatus comprising:

an input unit for receiving a first plurality of low-resolution images (S0,...,Sn);
a displacement determination unit (420) for determining a plurality of displacement vectors (d0,...,dn) indicating relative displacements of the first plurality of low-resolution images (S0,...,Sn); and
a resolution enhancement unit (410) for computing a high-resolution image (H) from the first plurality of low-resolution images (S0,...,Sn) and the plurality of displacement vectors (d0,...,dn),

**characterized by**
a cost function unit (480) for calculating a measure indicating the quality of the computed high-resolution image (H);
wherein the displacement determination unit (420) is adapted for performing an optimization process on the plurality of displacement vectors (d0,...,dn) in accordance with the calculated measure so as to simultaneously improve accuracy of the plurality of displacement vectors (d0,...,dn) and quality of the high-resolution image (H).

**13.** An apparatus according to claim 12 for reconstructing a high-resolution image from a plurality of low-resolution images, said apparatus further comprising:

an output unit for outputting the high-resolution image (H) in accordance with a result of the optimization process.

**14.** An apparatus according to claim 12 for determining a plurality of displacement vectors indicating relative displacements of a plurality of low-resolution images, said apparatus further comprising:

an output unit for outputting the plurality of displacement vectors (d0,...,dn) in accordance with a result of the optimization process.

**15.** An apparatus according to any of claims 12 to 14, further comprising:

an internal model (450, 460, 470) of the image acquisition system for reconstructing a second plurality of low-resolution images (S0',...,Sn') from the high-resolution image (H); and
a first computing unit (480) for computing image differences between each of the second plurality of low-resolution images (S0',...,Sn') to a corresponding one of the first plurality of low-resolution images (S0,...,Sn);

wherein the cost function unit (480) is calculating the measure in accordance with the computed image differences so that the calculated measure is higher if the computed image differences are smaller.

**16.** An apparatus according to claim 15, wherein the internal model further comprises
a low-pass filter (450) for filtering the high-resolution image (H);
a plurality of shifting units (460) for shifting the filtered high-resolution image (H) by an amount determined by a corresponding displacement vector of the plurality of displacement vectors (d0,...,dn); and
a plurality of down-sampling units (470) for down sampling the shifted high-resolution image (H) to a resolution of the low-resolution image.

**17.** An apparatus according to claim 15 or 16, further comprising
a second computing unit (480) for computing pixel differences between neighbouring pixels of the high-resolution image (H);
wherein the cost function unit (480) is calculating the measure in accordance with the computed pixel differences so that the calculated measure is higher if the computed pixel differences are smaller.

**18.** An apparatus according to claim 17, further comprising
a cost function unit (480) for computing a cost function comprising terms with said image differences and a regularization term based on said pixel differences.

19. An apparatus according to claim 18, wherein the displacement determination unit (420) receives input from the cost function unit (480) so as to determine the plurality of displacement vectors (d0,...,dn) by a numerical process for minimizing the cost function.

20. An apparatus according to claim 18, wherein the resolution enhancement unit (410) receives input from the cost function unit (480) so as to compute the high-resolution image (H) by a numerical process for minimizing the cost function.

21. An apparatus according to claim 18, wherein both the displacement determination unit (420) and the resolution enhancement unit (410) receive input from the cost function unit (480) so as to simultaneously determine both the plurality of displacement vectors (d0,...,dn) and the high-resolution image (H) by a numerical process for minimizing the cost function in variables describing the plurality of displacement vectors (d0,...,dn) and the high-resolution image (H).

# Fig. 1

LR images

Motion Estimation and Registration

Interpolation

HR image

Restoration

SR image

110 120 125 130 140

EP 1 906 357 A1

Fig. 2

# Fig. 3

EP 1 906 357 A1

# Fig. 4

400

S0
⋮
Sn

Resolution Enhancement — 410

Resolution Enhanced Image

Filter — 450

Shift — 460

Down Sampling — 470  S0'

d0

⋮

Shift

Down Sampling  Sn'

dn

Displacement Optimization — 420

Displacement Information

Quality Measure

Cost Function — 480

H

D

EP 1 906 357 A1

# Fig. 5

EP 1 906 357 A1

Estimate displacement vectors — 510

Compute HR image — 520

Calculate quality measure — 530

Modify displacement vectors — 550

Exit criterion? — 540

No

yes

Output HR image and/or displacement vectors — 560

# Fig. 6

600

EP 1 906 357 A1

# Fig. 7

```
Estimate displacement vectors          710
            |
            v
Estimate HR image                      720
            |
            v
Calculate cost function        730       Modify displacement vectors   750
            |                            and HR image
            v
      Exit criterion?    740   --No-->
            |
           yes
            |
            v
Output HR image and/or         760
displacement vectors
```

EP 1 906 357 A1

**European Patent Office**

**EUROPEAN SEARCH REPORT**

Application Number

EP 06 02 0431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUSSELL C HARDIE ET AL: "Joint MAP Registration and High-Resolution Image Estimation Using a Sequence of Undersampled Images" IEEE TRANSACTIONS ON IMAGE PROCESSING, IEEE SERVICE CENTER, PISCATAWAY, NJ, US, vol. 6, no. 12, December 1997 (1997-12), XP011026246 ISSN: 1057-7149 * section II * * section III: B, C * * abstract * | 1-21 | INV. G06T5/50 G06T7/20 |
| X | MATEOS J ET AL: "Simultaneous motion estimation and resolution enhancement of compressed low resolution video" IMAGE PROCESSING, 2000. PROCEEDINGS. 2000 INTERNATIONAL CONFERENCE ON SEPTEMBER 10-13, 2000, PISCATAWAY, NJ, USA,IEEE, vol. 2, 10 September 2000 (2000-09-10), pages 653-656, XP010530069 ISBN: 0-7803-6297-7 * sections 2. and 3. * * abstract * | 1-21 | |
| A | CALLICO G M ET AL: "Low-cost and real-time super-resolution over a video encoder IP" PROCEEDINGS FOURTH INTERNATIONAL SYMPOSIUM ON QUALITY ELECTRONIC DESIGN IEEE COMPUT. SOC LOS ALAMITOS, CA, USA, 2003, pages 79-84, XP002432601 ISBN: 0-7695-1881-8 * section 2. * * abstract * | 1-21 | TECHNICAL FIELDS SEARCHED (IPC) G06T |

-/--

The present search report has been drawn up for all claims

| Place of search | Date of completion of the search | Examiner |
|---|---|---|
| Berlin | 8 May 2007 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 06 02 0431

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SALARI E ET AL: "Integrated recurrent neural network for image resolution enhancement from multiple image frames" IEE PROCEEDINGS: VISION, IMAGE AND SIGNAL PROCESSING, INSTITUTION OF ELECTRICAL ENGINEERS, GB, vol. 150, no. 5, 22 October 2003 (2003-10-22), pages 299-305, XP006024263 ISSN: 1350-245X * section 2 * ----- | 1-21 | |
| | | | TECHNICAL FIELDS SEARCHED (IPC) |

The present search report has been drawn up for all claims

| Place of search | Date of completion of the search | Examiner |
|---|---|---|
| Berlin | 8 May 2007 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)